(19) Europäisches Patentamt
European Patent Office
Office européen des brevets

(11) **EP 2 223 943 B1**

(12) **EUROPEAN PATENT SPECIFICATION**

(45) Date of publication and mention
of the grant of the patent:
**19.10.2011 Bulletin 2011/42**

(51) Int Cl.:
*C08F 2/00* [(2006.01)]    *C08L 23/10* [(2006.01)]

(21) Application number: **09153581.5**

(22) Date of filing: **25.02.2009**

(54) **Multimodal polymer of propylene, composition containing the same and a process for manufacturing the same**

Multimodales Polymer aus Propylen, Zusammensetzung damit und Verfahren zur Herstellung davon

Polymère de propylène multimodal, composition le contenant et son procédé de fabrication

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**01.09.2010 Bulletin 2010/35**

(73) Proprietor: **Borealis AG**
**1220 Vienna (AT)**

(72) Inventors:
• **Bergstra, Michiel**
**00810, Helsinki (FI)**
• **Malm, Bo**
**02110, Espoo (FI)**
• **Hätönen, Jari**
**06100 Porvoo (FI)**
• **Eriksson, Erik**
**00810, Helsinki (FI)**
• **Follestad, Arild**
**3960, Stathelle (NO)**

(74) Representative: **Kador, Utz Ulrich**
**Kador & Partner**
**Corneliusstrasse 15**
**80469 München (DE)**

(56) References cited:
EP-A1- 1 452 630    EP-A1- 1 632 529
EP-A1- 1 724 289    WO-A1-2006/074930

EP 2 223 943 B1

## Description

### Objective of the Invention

The present invention provides a heterophasic propylene copolymer having an improved balance between stiffness and fraction of xylene soluble polymer.

The present invention also provides a process for producing propylene copolymers having an improved balance between stiffness and fraction of xylene soluble polymer.

### Technical Field

EP-A-1364986 discloses propylene polymers having improved rigidity. The polymers are β-nucleated propylene homopolymers or heterophasic copolymers. The rigidity was increased by adding inorganic fillers, such as talc, in an amount of at least 10 % by weight.

EP-A-1724303 discloses propylene copolymer compositions having high stiffness. The examples disclosed that for polymers having a fraction of xylene soluble polymer of about 10 to 13 % the tensile modulus was from 1400 to 1700 MPa.

EP-A-1632529 discloses propylene polymer compositions having an improved balance of stiffness and impact strength. The examples reported that for XS from 6 to 7 % the tensile modulus was from 1930 to 1860 MPa.

US-A-2005/0187367 discloses propylene polymers having a low XS and high rigidity. The polymers were reported to contain at most 2 % of xylene soluble polymer and they had a melt flow rate of from 0.01 to 10 g/10 min.

EP-A-573862 discloses broad molecular weight distribution propylene homo- and copolymers having improved stiffness and a melt flow rate of more than 2 g/10 min. The polymers could also be blended with other polymers, such as elastomers.

EP-A-1026184 discloses propylene polymers having a broad molecular weight distribution matrix component consisting of a high molecular weight component and a low molecular weight component, and an elastomeric component.

WO-A-2005/014713 discloses articles made of polypropylene having a high tensile modulus and good impact strength. The examples disclosed a resin having a tensile modulus of 1811 MPa and XS of 8.3 %.

While the above publications disclose propylene polymers and compositions comprising propylene polymers there still remains a need to further improve the stiffness while maintaining the impact properties of the polymer. Especially there remains a need to have an even higher rigidity of the polymer (meaning, a higher tensile modulus) for a given amount of xylene-soluble polymer.

The present propylene polymers are useful in a number of applications, such as in thermoforming, film extrusion, pipe extrusion and different moulding applications, such as injection moulding and blow moulding.

### Summary of the Invention

One aspect of the present invention is to provide a multimodal polymer of propylene comprising a matrix of semicrystalline polymer and a rubber (D) dispersed in said matrix, the multimodal polymer comprising units derived from propylene of from 85 to 99 % by weight and units derived from ethylene and/or $C_4$ to $C_{10}$ alpha-olefins of from 1 to 15 % by weight, characterized in that the multimodal polymer has

a fraction soluble in xylene XS at a temperature of 25 ˚C of from 7 to 16 % by weight;
a melt flow rate MFR2 of from 0.05 to 5 g/10 min;
a polydispersity index PI of from 3.5 to 30;
a tensile modulus TM and XS meeting the relationship TM $\geq$ 2375 - 46.2·XS.

Another aspect of the present invention is to provide a process for producing the multimodal polymer of propylene, said process comprising:

- feeding polymerization catalyst to a first polymerization zone;
- feeding propylene to the first polymerization zone;
- maintaining the first polymerization zone in conditions to polymerize propylene in the presence of said catalyst to polypropylene;
- continuously or intermittently discharging a portion of reaction mixture comprising unreacted propylene, polypropylene and polymerization catalyst from the first reaction zone;
- feeding polymerization catalyst to a second polymerization zone;
- feeding propylene and hydrogen to the second polymerization zone;

- maintaining the second polymerization zone in conditions to polymerize propylene in the presence of said catalyst to polypropylene;
- continuously or intermittently withdrawing a portion of the mixture contained in the second reaction zone;
- feeding polymerization catalyst to a third polymerization zone;
- feeding propylene and optionally hydrogen to the third polymerization zone;
- maintaining the third polymerization zone in conditions to polymerize propylene in the presence of said catalyst to polypropylene;
- continuously or intermittently withdrawing a portion of the mixture contained in the third reaction zone;
- feeding polymerization catalyst to a fourth polymerization zone;
- feeding propylene, ethylene or $C_4$ to $C_{10}$ alpha-olefin comonomer and optionally hydrogen to the fourth polymerization zone;
- maintaining the fourth polymerization zone in conditions to copolymerize propylene and the alpha-olefin comonomer in the presence of said catalyst to an elastomeric copolymer of propylene;
- continuously or intermittently withdrawing a portion of the mixture contained in the fourth reaction zone;
- recovering the polymer
- mixing the recovered polymer with at least one additive to produce a mixture of polymer and at least one additive; and
- extruding said mixture into pellets;

wherein said first, second, third and fourth reaction zones are cascaded so that the polymer from a preceding zone is transferred to the subsequent reaction zone together with the active catalyst dispersed in said polymer and where a part of the polymer may be returned from a subsequent zone to a preceding zone and wherein said first, second, third and fourth reaction zones may be arranged in any order and wherein the multimodal polymer of propylene comprises a matrix of semicrystalline polymer and a rubber (D) dispersed in said matrix, the multimodal polymer comprising units derived from propylene of from 85 to 99 % by weight and units derived from ethylene or $C_4$ to $C_{10}$ alpha-olefins of from 1 to 15 % by weight, characterized in that the multimodal polymer has

a fraction soluble in xylene XS at a temperature of 25 °C of from 7 to 16 % by weight;
a melt flow rate $MFR_2$ of from 0.05 to 5 g/10 min;
a polydispersity index PI of from 3.5 to 30;
a tensile modulus TM and XS meeting the relationship $TM \geq 2375 - 46.2 \cdot XS$.

In the definitions above $MFR_2$ is determined according to ISO 1133, PI is the polydispersity index PI is calculated according to the equation: $PI = 105 \, Pa/G_c$, wherein $G_c$ in Pa is the cross-over modulus at which $G'=G''=G_c$ as obtained from the dynamic rheology experiments and TM is the tensile modulus determined according to ISO 527-2, as described later in the specification.

The polymers according to the present invention have an excellent balance between the impact strength and stiffness, and especially the impact strength at low temperatures and stiffness.

The process according to the present invention offers an economical and flexible method of producing the advantageous polymers as described above.

**Description of Figure**

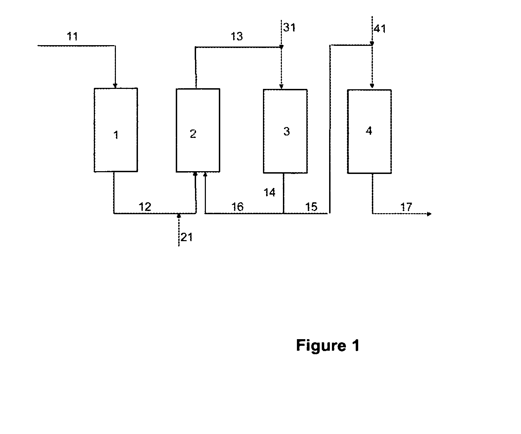

Figure 1 is a schematic presentation of a process according to the present invention.

**Detailed Description**

Polymer composition

A multimodal polymer of propylene comprising a matrix of semicrystalline polymer and a rubber (D) dispersed in said matrix, the multimodal polymer comprising units derived from propylene of from 85 to 99 % by weight and units derived from ethylene and/or $C_4$ to $C_{10}$ alpha-olefins of from 1 to 15 % by weight, characterized in that the multimodal polymer has

a fraction soluble in xylene at a temperature of 25 °C XS of from 7 to 16 % by weight;
a melt flow rate $MFR_2$ of from 0.05 to 5 g/10 min;
a polydispersity index PI, given by dynamic rheology measurement as $PI=105 \, Pa/G_c$, where $G_c$ is the cross-over modulus at which $G' = G'' = G_c$, of from 3.5 to 30;
a tensile modulus TM and XS meeting the relationship $TM \geq 2375 - 46.2 \cdot XS$.

The polymer compositions according to the present invention offer an outstanding combination of stiffness on one hand and impact strength on the other hand. They may be used in a number of applications, such as injection moulding, film extrusion, pipe extrusion, and others.

For the purpose of the present invention the phrase "multimodal polymer" is used to denote a polymer comprising at least two components and preferably at least three components, where each component has a weight average molecular weight, or a melt flow rate, or an intrinsic viscosity, which is substantially different from the corresponding value of any other component in the polymer. By "substantially different" is here meant that the values differ by at least 25 %, preferably by at least 50 %.

As indicated above the polydispersity index PI is from 3.5 to 30. Preferably the value of PI is within a range of from 5 to 30, more preferably from 7 to 25. Especially preferably the PI has a value of at least 7, for example from 7 to 30.

Preferably the multimodal polymer of propylene has a melt flow rate $MFR_2$ of from 0.1 to 2 g/10 min. Preferably still, the matrix of the multimodal polymer of propylene has a melt flow rate $MFR_2$ of from 0.1 to 2 g/10 min.

As indicated above the polymer has a fraction of xylene soluble polymer at a temperature of 25 ˚C, XS, of from 7 % to 16 %. Preferably the fraction of xylene soluble polymer is from 7 to 14 % and more preferably from 8 to 14 %, for instance 8 to 12 %. As described later in the text the fraction of xylene soluble polymer is determined by dissolving the polymer in hot xylene, then cooling the solution and measuring the insoluble polymer fraction.

The multimodal polymer preferably has tensile modulus TM and XS meeting the relationship $TM \geq 2375 - 46.2 \cdot XS$ if XS<10.3 or $TM \geq 1900$ if $XS \geq 10.3$.

Preferably the matrix of the multimodal polymer of propylene is a propylene homopolymer. This allows achieving the high rigidity of the multimodal polymer. It should be understood, however, that because the process streams may contain other polymerizable species as impurities the homopolymer may contain trace amounts of other units than propylene units. The amount of such other units is less than 0.1 % by mole, preferably less than 0.05 % by mole. Especially preferably the homopolymer only contains propylene units.

Especially preferably, the polymer composition of the present invention includes the following four components.

### 1st component

The first component of the preferred composition is a high molecular weight propylene homopolymer (A). The high molecular weight propylene homopolymer (A) preferably has a melt flow rate $MFR_2$ of from 0.001 to 0.1 g/10 min. Alternatively or additionally, the intrinsic viscosity of the high molecular weight polymer (A) is preferably at least 6 dl/g. The high molecular weight propylene homopolymer (A) is preferably present in the composition in an amount of from 5 to 50 % by weight, based on the combined amount of components (A), (B) and (C). More preferably, the homopolymer (A) is present in an amount of 10 to 45 %.

### 2nd component

The second component of the preferred composition is a low molecular weight propylene homopolymer (B). The low molecular weight propylene homopolymer (B) preferably has a melt flow rate $MFR_2$ of from 5 to 100 g/10 min. Alternatively or additionally it has an intrinsic viscosity of from 0.5 to 3 dl/g. The low molecular weight homopolymer (B) is preferably present in the composition in an amount of from 30 to 70 % by weight, based on the combined amount of components (A), (B) and (C). More preferably the amount of polymer (B) is from 40 to 65 %.

### 3rd component

The third component of the preferred composition is a medium molecular weight propylene homopolymer (C). The medium molecular weight propylene homopolymer (C) preferably has a melt flow rate $MFR_2$ of from 0.1 to 5.0 g/10 min. Alternatively or additionally it has an intrinsic viscosity of from 3 to 5 dl/g. The medium molecular weight homopolymer (C) is preferably present in the composition in an amount of from 5 to 35 % by weight, based on the combined amount of components (A), (B) and (C).

### 4th component

The fourth component of the preferred composition is an elastomeric copolymer of propylene and at least one other alpha-olefin comonomer selected from ethylene and $C_4$ to $C_{10}$ alpha-olefins (D). The elastomeric copolymer (D) has preferably an intrinsic viscosity of from 2 to 10 dl/g. It further preferably has a content of the units derived from comonomer(s) other than propylene of from 25 to 75 % by mole, more preferably from 30 to 70 % by mole, based on the total number of units in the copolymer (D). Preferably still, the copolymer (D) is present in the composition in an amount of from 7 to 16 % by weight, based on the total composition. More preferably the amount of polymer (D) is from 8 to 14 % and even more preferably 8 to 12%.

Other components

In addition to the polymer components listed above the polymer composition may contain other components. Especially it may contain additives and fillers known in the art, such as antioxidants, process stabilizers, UV screens or stabilizers, nucleating agents etc.

Especially preferably the composition contains a nucleating agent and in particular an α-nucleating agent. Nucleating agents are used, for instance, to increase stiffness, to improve the transparency or to improve crystallization behaviour. They are chemical substances which when incorporated in plastics form nuclei for the growth of crystals in the polymer melt. In polypropylene, for example, a higher degree of crystallinity and more uniform crystalline structure is obtained by adding a nucleating agent such as adipic and benzoic acid or certain of their metal salts. Examples of suitable nucleating agents are talc, dibenzylidene sorbitol (DBS), nanoclays such as montmorillonate, sodium benzoate, sodium salt of 4-tert-butylbenzoic acid, sodium salts of adipic acid or diphenylacetic acid, sodium succinate, poly(vinylcyclohexane) or poly(3-methyl-1-butene). The nucleating agents are used in the amounts known in the art, such as from 0.00001 to 3 % by weight, depending on the type of the nucleating agent.

Polymerization process

Catalyst

The solid transition metal component preferably comprises a magnesium halide and a transition metal compound. These compounds may be supported on a particulate support, such as inorganic oxide, like silica or alumina, or, usually, the magnesium halide itself may form the solid support. Examples of such catalysts are disclosed, among others, in WO 87/07620, WO 92/21705, WO 93/11165, WO 93/11166, WO 93/19100, WO 97/36939, WO 98/12234, WO 99/33842 and WO 03/000756. It is also possible to prepare the whole catalyst in one step, e.g., by solidifying the catalyst from an emulsion. Such catalysts are disclosed, among others, in WO 03/000757, WO 03/000754 and WO 2004/029112.

In addition to the magnesium halide and transition metal compound the solid transition metal component usually also comprises an electron donor (internal electron donor). Suitable electron donors are, among others, esters of carboxylic acids, like phthalates, citraconates, and succinates. Also oxygen- or nitrogen-containing silicon compounds may be used. Examples of suitable compounds are shown in WO 92/19659, WO 92/19653, WO 92/19658, US 4347160, US 4382019, US 4435550, US 4465782, US 4473660, US 4530912 and US 4560671.

One group of useful solid catalyst components are those disclosed in WO 2004/029112. Thus, in one preferred embodiment of the present invention, the solid catalyst component is prepared by a process comprising: preparing a solution of magnesium complex by reacting an alkoxy magnesium compound and an electron donor or precursor thereof in a $C_6$-$C_{10}$ aromatic liquid reaction medium; reacting said magnesium complex with a compound of at least one fourvalent Group 4 metal at a temperature greater than 10 °C and less than 60 °C to produce an emulsion of a denser, $TiCl_4$/toluene-insoluble, oil dispersed phase having, Group 4 metal/Mg mol ratio 0.1 to 10 in an oil disperse phase having Group 4 metal/Mg mol ratio 10 to 100; agitating the emulsion, optionally in the presence of an emulsion stabilizer and/or a turbulence minimizing agent, in order to maintain the droplets of said dispersed phase within an average size range of 5 to 200 μm. The catalyst particles are obtained after solidifying said particles of the dispersed phase by heating. In said process an aluminium alkyl compound of the formula $AlR_{3-n}X_n$, where R is an alkyl or alkoxy group of 1 to 20, preferably of 1 to 10 carbon atoms, X is a halogen and n is 0, 1, 2 or 3, is added and brought into contact with the droplets of the dispersed phase of the agitated emulsion before recovering the solidified particles.

The cocatalyst used in combination with the transition metal compound typically comprises an aluminium alkyl compound. The aluminium alkyl compound is preferably trialkyl aluminium such as trimethylaluminium, triethylaluminium, tri-isobutylaluminium or tri-n-octylaluminium. However, it may also be an alkylaluminium halide, such as diethylaluminium chloride, dimethylaluminium chloride and ethylaluminium sesquichloride. It may also be an alumoxane, such as methylalumoxane (MAO), tetraisobutylalumoxane (TIBAO) or hexaisobutylalumoxane (HIBAO).

Preferred cocatalysts are aluminium trialkyl compounds. Especially preferred cocatalysts are triethylaluminium and tri-isobutylaluminium.

Preferably the cocatalyst also comprises an external electron donor. Suitable electron donors known in the art include ethers, ketones, amines, alcohols, phenols, phosphines and silanes. Examples of these compounds are given, among others, in WO 95/32994, US 4107414, US 4186107, US 4226963, US 4347160, US 4382019, US 4435550, US 4465782, US 4472524, US 4473660, US 4522930, US 4530912, US 4532313, US 4560671 and US 4657882. Electron donors consisting of organosilane compounds, containing Si-OCOR, Si-OR, or Si-NR$_2$ bonds, having silicon as the central atom, and R is an alkyl, alkenyl, aryl, arylalkyl or cycloalkyl with 1-20 carbon atoms are known in the art. Such compounds are described in US 4472524, US 4522930, US 4560671, US 4581342, US 4657882 and EP 45976 and EP 45977.

Preferred external electron donors are silane donors, which are suitably used with aluminium trialkyl compounds. An especially preferred external donor is dicyclopentyldimethoxysilane, which suitably is used together with triethylaluminium or tri-isobutylaluminium. This combination has been found especially effective in producing the desired high stiffness (as seen by the high value of the tensile modulus) for the multimodal polymer of propylene.

The catalyst may also be pre-treated, such as prepolymerized, so that it contains up to 5 grams of prepolymer per gram of solid catalyst component. Especially preferably the catalyst contains from about 0.01 grams up to about 5 grams, such as one or two grams, of poly(vinylcyclohexane) per one gram of solid catalyst component. This allows the preparation of nucleated polypropylene as disclosed in EP 607703, EP 1028984, EP 1028985 and EP 1030878.

The catalyst may be transferred into the polymerization zone by any means known in the art. It is thus possible to suspend the catalyst in a diluent and maintain it as homogeneous slurry. Especially preferred it is to use oil having a viscosity from 20 to 1500 mPa·s as diluent, as disclosed in WO-A-2006/063771. It is also possible to mix the catalyst with a viscous mixture of grease and oil and feed the resultant paste into the polymerization zone. Further still, it is possible to let the catalyst settle and introduce portions of thus obtained catalyst mud into the polymerization zone in a manner disclosed, for instance, in EP-A-428054.

Prepolymerization

In a preferred embodiment, the prepolymerization is conducted in a continuous manner as bulk slurry polymerization in liquid propylene, i.e. the liquid phase mainly comprises propylene, with minor amount of other reactants and optionally inert components dissolved therein. Preferably the prepolymerization is conducted in a continuous stirred tank reactor or a loop reactor.

The prepolymerization reaction is typically conducted at a temperature of 0 to 60 ˚C, preferably from 10 to 50 ˚C, and more preferably from 20 to 45 ˚C.

The pressure in the prepolymerization reactor is not critical but must be sufficiently high to maintain the reaction mixture in liquid phase. Thus, the pressure may be from 20 to 100 bar, for example 30 to 70 bar.

The reaction conditions are well known in the art as disclosed, among others, in GB 1580635.

In the prepolymerization step it is also possible to feed comonomers into the prepolymerization stage. Examples of suitable comonomers are ethylene or alpha-olefins having from 4 to 10 carbon atoms. Especially suitable comonomers are ethylene, 1-butene, 1-hexene, 1-octene or their mixtures. Most preferable comonomer is ethylene.

In average, the amount of prepolymer on the catalyst is preferably from 10 to 1000 g per g of the solid catalyst component, more preferably is from 50 to 500 g per g of the solid catalyst component.

As the person skilled in the art knows, the catalyst particles recovered from a continuous stirred prepolymerization reactor do not all contain the same amount of prepolymer. Instead, each particle has its own characteristic amount which depends on the residence time of that particle in the prepolymerization reactor. As some particles remain in the reactor for a relatively long time and some for a relatively short time, then also the amount of prepolymer on different particles is different and some individual particles may contain an amount of prepolymer which is outside the above limits. However, the average amount of prepolymer on the catalyst is preferably within the limits specified above. The amount of prepolymer is known in the art, among others, from GB 1580635.

The catalyst components are preferably all introduced into the prepolymerization step. However, where the solid catalyst component and the cocatalyst can be fed separately it is possible that only a part of the cocatalyst is introduced into the prepolymerization stage and the remaining part into subsequent polymerization stages. Also in such cases it is necessary to introduce so much cocatalyst into the prepolymerization stage that a sufficient polymerization reaction is obtained therein.

It is possible to add other components also to the prepolymerization stage. Thus, hydrogen may be added into the prepolymerization stage to control the molecular weight of the prepolymer as is known in the art. Further, antistatic additive may be used to prevent the particles from adhering to each other or the walls of the reactor as disclosed in WO-A-00/66640.

Slurry

The polymerization in the first polymerization zone may be conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

Slurry polymerization is preferably a so called bulk polymerization. By "bulk polymerization" is meant a process where the polymerization is conducted in a liquid monomer essentially in the absence of an inert diluent. However, as it is known to a person skilled in the art the monomers used in commercial production are never pure but always contain aliphatic hydrocarbons as impurities. For instance, the propylene monomer may contain up to 5 % of propane as an impurity. As propylene is consumed in the reaction and also recycled from the reaction effluent back to the polymerization, the inert components tend to accumulate, and thus the reaction medium may comprise up to 40 wt-% of other compounds than monomer. It is to be understood, however, that such a polymerization process is still within the meaning of "bulk polymerization", as defined above.

The temperature in the slurry polymerization is typically from 50 to 110 ˚C, preferably from 60 to 100 ˚C and in particular from 65 to 95 ˚C. The pressure is from 1 to 150 bar, preferably from 10 to 100 bar. In some cases it may be preferred to conduct the polymerization at a temperature which is higher than the critical temperature of the fluid mixture constituting the reaction phase and at a pressure which is higher than the critical pressure of said fluid mixture. Such reaction conditions are often referred to as "supercritical conditions". The phrase "supercritical fluid" is used to denote a fluid or fluid mixture at a temperature and pressure exceeding the critical temperature and pressure of said fluid or fluid mixture.

The slurry polymerization may be conducted in any known reactor used for slurry polymerization. Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

The slurry may be withdrawn from the reactor either continuously or intermittently. A preferred way of intermittent withdrawal is the use of settling legs where the solids concentration of the slurry is allowed to increase before withdrawing a batch of the concentrated slurry from the reactor. The use of settling legs is disclosed, among others, in US-A-3374211, US-A-3242150 and EP-A-1310295. Continuous withdrawal is disclosed, among others, in EP-A-891990, EP-A-1415999, EP-A-1591460 and EP-A-1860125. The continuous withdrawal may be combined with a suitable concentration method, as disclosed in EP-A-1860125 and EP-A-1591460.

Into the slurry polymerization stage other components may also be introduced as it is known in the art. Thus, hydrogen can be used to control the molecular weight of the polymer. Process additives may also be introduced into the reactor to facilitate a stable operation of the process.

When the slurry polymerization stage is followed by a gas phase polymerization stage it is preferred to conduct the slurry directly into the gas phase polymerization zone without a flash step between the stages. This kind of direct feed is described in EP-A-887379, EP-A-887380, EP-A-887381 and EP-A-991684.

Gas phase

One or more of the reaction zones may be gas phase polymerization zones.

Fluidized bed

In a fluidized bed gas phase reactor an olefin is polymerized in the presence of a polymerization catalyst in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. To make sure that the gas flow is uniformly distributed over the cross-sectional surface area of the inlet chamber the inlet pipe may be equipped with a flow dividing element as known in the art, e.g. US-A-4933149 and EP-A-684871.

From the inlet chamber the gas flow is passed upwards through a fluidization grid into the fluidized bed. The purpose of the fluidization grid is to divide the gas flow evenly through the cross-sectional area of the bed. Sometimes the fluidization grid may be arranged to establish a gas stream to sweep along the reactor walls, as disclosed in WO-A-2005/087361. Other types of fluidization grids are disclosed, among others, in US-A-4578879, EP 600414 and EP-A-721798. An overview is given in Geldart and Bayens: The Design of Distributors for Gas-fluidized Beds, Powder Technology, Vol. 42, 1985.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas. The minimum fluidization velocity and the onset velocity of pneumatic transport can be calculated when the particle characteristics are know by using common engineering practise. An overview is given, among others in Geldart: Gas Fluidization Technology, J.Wiley & Sons, 1986.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised. The vaporisation heat then contributes to the removal of the reaction heat. This kind of operation is called condensed mode and variations of it are disclosed, among others, in WO-A-2007/025640, US-A-4543399, EP-A-699213 and WO-A-94/25495. It is also possible to add condensing agents into the recycle gas stream, as disclosed in EP-A-696293. The condensing agents are non-polymerizable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The catalyst may be introduced into the reactor in various ways, either continuously or intermittently. Among others, WO-A-01/05845 and EP-A-499759 disclose such methods. Where the gas phase reactor is a part of a reactor cascade the catalyst is usually dispersed within the polymer particles from the preceding polymerization stage. The polymer particles may be introduced into the gas phase reactor as disclosed in EP-A-1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

The top part of the gas phase reactor may include a so called disengagement zone. In such a zone the diameter of the reactor is increased to reduce the gas velocity and allow the particles that are carried from the bed with the fluidization gas to settle back to the bed.

The bed level may be observed by different techniques known in the art. For instance, the pressure difference between the bottom of the reactor and a specific height of the bed may be recorded over the whole length of the reactor and the bed level may be calculated based on the pressure difference values. Such a calculation yields a time-averaged level. It is also possible to use ultrasonic sensors or radioactive sensors. With these methods instantaneous levels may be obtained, which of course may then be averaged over time to obtain a time-averaged bed level.

Also antistatic agent(s) may be introduced into the gas phase reactor if needed. Suitable antistatic agents and methods to use them are disclosed, among others, in US-A-5026795, US-A-4803251, US-A-4532311, US-A-4855370 and EP-A-560035. They are usually polar compounds and include, among others, water, ketones, aldehydes and alcohols.

The reactor may also include a mechanical agitator to further facilitate mixing within the fluidized bed. An example of suitable agitator design is given in EP-A-707513.

Fast fluidized bed

The polymerization may also be conducted in a fast fluidized bed reactor. In such a reactor the velocity of the fluidization gas exceeds the onset velocity of pneumatic transport. Then the whole bed is carried by the fluidization gas. The gas transports the polymer particles to a separation device, such as cyclone, where the gas is separated from the polymer particles. The polymer is transferred to a subsequent reaction zone, such as a settled bed or a fluidized bed or another fast fluidized bed reactor. The gas, on the other hand, is compressed, cooled and recycled to the bottom of the fast fluidized bed reactor. In one such embodiment the polymer is transferred from the riser (operated in fast fluidized mode) into the downcomer (operated as settled bed, as explained below) and the fluidizing gas is then directed to compression and cooling as described above. The combination of fast fluidized bed and settled bed is disclosed, among others, in WO-A-97104015, WO-A-2006/022736 and WO-A-2006/120187.

Settled bed

Polymerization may also be conducted in a settled bed. In the settled bed the polymer flows downward in a plug flow manner in an environment containing reactive components in gaseous phase. The polymer powder is introduced into the bed from the top from where it flows downwards due to gravity.

The reactants, such as hydrogen, monomer and comonomers, may be introduced at any point of the reactor. However, where the gas flows upwards its velocity should not exceed the minimum fluidization velocity as otherwise no downward flow of powder would be obtained. It is also preferred to have a gas buffer at the top of the reactor so that reaction gas from previous polymerization zones contained in the polymer powder would be removed to the extent possible.

The temperature of the settled bed may be controlled by adjusting the temperature and ratio of the reactant and/or inert gases introduced into the settled bed zone.

The settled bed polymerization zone is preferably combined with a fluidized bed polymerization zone or fast fluidized bed reaction zone. Thus, the polymer is introduced into the top of the settled bed zone from a fluidized bed zone or a fast fluidized bed zone. The polymer is withdrawn from the bottom of the settled bed polymerization zone and recycled into the fluidized bed polymerization zone or fast fluidized bed polymerization zone.

Polymerization in settled bed is disclosed, among others, in EP-A-1633466, EP-A-1484343 and WO-A-97/04015.

Combined Process

Each polymer component (A), (B), (C) and (D) is produced in a separate reaction zone, hereinafter referred to as the first, the second, the third and the fourth reaction zone, respectively. Each reaction zone may be any kind of reactor or zone as described above. Thus, it is possible to produce each component in a separate slurry reactor or in a separate gas phase reactor. However, it is also possible to use two gas phase reactors having separate zones, for instance two fluidized bed reactors combined with two settled bed reactors. This is exemplified in Figure 1. For instance, the component (A) can be produced in the first reaction zone (1) in a slurry polymerization zone. The catalyst and the reactants are introduced into the first reaction zone (1) via the feed line (11). The product, polymer powder together with the fluid phase, is withdrawn from the reaction zone (1) by using the product outtake line (12) and directed to the subsequent second reaction zone (2) where the component (B) is produced in a fluidized bed polymerization zone. Additional reactants are introduced into the second reaction zone (2) via the feed line (21). The polymer, containing the active catalyst and some accompanying gas, is withdrawn from the second reaction zone (2) via the line (13) which is connected to the third reaction zone (3) in a settled bed polymerization zone where the component (C) is produced. Additional reactants are introduced into the third reaction zone via the feed line (31). The polymer from the third reaction zone (3) together with some reactor gas is withdrawn by using the line (14). Part of the polymer withdrawn via line (14) is directed via line (15) back to the second reaction zone (2) while another part is taken via line (16) into the fourth reaction zone (4) where the component (D) is produced in a fluidized bed polymerization zone. Additional reactants are introduced into the fourth reaction zone (4) via line (41). The product is withdrawn from the fourth reaction zone (4) via the line (17) and taken to further treatment steps. While the figure only shows the transfer lines between the reactors, the skilled person anyway understands that the step of transferring the product of a preceding reaction zone to the subsequent reaction zone may include separation stages where, for instance, a part or whole of the fluid phase comprising propylene and eventually hydrogen is removed from the polymer stream which is directed to the subsequent reaction zone.

In one preferred embodiment of the invention the solid catalyst component, the aluminium alkyl and the silane electron donor are introduced into a continuously operating prepolymerization reactor together with propylene and hydrogen. Preferably the solid catalyst component has been prepolymerized in an earlier prepolymerization step so that it contains from 0.01 to 5 grams of poly(vinylcyclohexane) per one gram of the solid catalyst component. Preferably still, hydrogen into the prepolymerization reactor is fed in an oscillating manner, such as shutting the hydrogen feed completely for a period of from 10 to 30 minutes and then maintaining a desired flow for a period of from 5 to 10 minutes.

As described above, preferably hydrogen is introduced into the prepolymerization reactor in an oscillating manner. Thus, the amount of hydrogen in the feed stream to the prepolymerization reactor varies as a function of time and, as a consequence thereof, the concentration of hydrogen within the reactor is periodically varying as well. However, the periodic variation in the feed stream might be different from the one in the reactor as the chemical system might need some time to react to the modified input. As an example, the amount of hydrogen fed to the reactor may vary in the form of a rectangular function (i.e. periodically switching on/off the hydrogen feed) whereas the hydrogen concentration within the reactor may vary in the form of a sinusoidal function. One preferred method is to shut the hydrogen feed completely for a given period of time, e.g. for 5 to 20 minutes, or preferably 10 to 20 minutes. Then for another period of 1 to 15 minutes, preferably 5 to 10 minutes the hydrogen feed is maintained at such a value that a desired average hydrogen feed is obtained. Such an operation of a slurry reactor is described in the European Patent Application No. 08166131.6.

The process is thus characterized, for instance, by that hydrogen feed of at least one reaction zone oscillates so that the hydrogen feed is maintained at a maximum value Fax for a time period of $t_1$, and at a minimum value $F_{min}$ for a time period of $t_2$, wherein the difference $F_{max}-F_{min} \geq 0.5 \cdot F_{avg}$, where $F_{avg}$ is the average hydrogen feed to said reaction zone, and $2 \cdot \tau \geq t_1, + t_2 \geq 0.05 \cdot \tau$, where $\tau$ is the average residence time of the polymer in said reaction zone. Especially preferably the minimum value $F_{min} = 0$.

The first reaction zone produces the high molecular weight propylene homopolymer component (A). Into the first reaction zone propylene is introduced together with the catalyst which comes from a preceding reaction zone, which may also be a prepolymerization zone. Fresh hydrogen may be introduced into the first polymerization zone, either in an oscillating manner or at a constant feed rate, so that the desired melt flow rate or IV of the polymer component (A) is obtained. However, it is also possible not to introduce any fresh hydrogen into the first reaction zone. Then the hydrogen needed to control the melt flow rate of polymer component (A) is carried over from the preceding reaction zone. The first reaction zone may be a slurry polymerization zone or a gas phase polymerization zone.

The second reaction zone produces the low molecular weight propylene homopolymer component (B). Into the second reaction zone propylene and hydrogen are introduced. The catalyst comes into the second reaction zone from a preceding reaction zone, which also may be a prepolymerization zone. The second reaction zone may be a slurry polymerization zone or a gas phase polymerization zone and preferably is a gas phase polymerization zone.

The third reaction zone produces the medium molecular weight propylene homopolymer component (C). Propylene and hydrogen are introduced into the third reaction zone. The catalyst comes from a preceding reaction zone which may also be a prepolymerization zone. The third reaction zone may be a slurry polymerization zone or a gas phase polymerization zone and preferably is a gas phase polymerization zone.

The fourth reaction zone produces the elastomeric copolymer component (D). The catalyst enters the fourth reaction zone from a preceding reaction zone. Propylene, alpha-olefin comonomer which preferably is ethylene, 1-butene or 1-hexene or their mixture, more preferably ethylene, and hydrogen are introduced into the fourth reaction zone in such amounts that the copolymer has the desired IV and comonomer content. The fourth reaction zone is preferably a gas phase polymerization zone.

According to one preferred embodiment the slurry from the prepolymerization zone is directed into the first reaction zone which is a slurry polymerization zone, preferably a loop reactor. The slurry from the first reaction zone is then directly conducted, without a flashing step, into the second reaction zone which is either a fluidized bed polymerization zone or a fast fluidized bed polymerization zone. From the second reaction zone the polymer (optionally with some accompanying gas) is transferred into the third reaction zone, which is a settled bed polymerization zone. From the third reaction zone a part of the polymer is redirected into the second reaction zone while a part of the polymer is transferred into the fourth reaction zone, which is a fluidized bed polymerization zone. From the fourth reaction zone the polymer is recovered and sent to further processing.

According to another preferred embodiment the slurry from the prepolymerization zone is directed into a second reaction zone which is either a fluidized bed reaction zone or a fast fluidized bed reaction zone. From the second reaction zone the polymer is directed into the first reaction zone, which is a settled bed polymerization zone. A part of the polymer from the first reaction zone is redirected into the second polymerization zone while a part is transferred into the third reaction zone, which is a fluidized bed polymerization zone. The polymer is transferred from the third reaction zone into a fourth reaction zone which is another fluidized bed polymerization zone. From the fourth reaction zone the polymer is recovered and sent to further processing.

Especially preferably the fluidized bed polymerization zones or fast fluidized bed polymerization zones referred to above are fluidized bed polymerization zones.

According to one more preferred embodiment the slurry from the prepolymerization zone is directed into the first reaction zone which is conducted in a slurry loop reactor. The slurry from the first reaction zone is then directly conducted, without a flashing step, into the second reaction zone which is a fluidized bed polymerization zone. From the second reaction zone the polymer (optionally with some accompanying gas) is transferred into the third reaction zone, which is another fluidized bed polymerization zone. From the third reaction zone the polymer is transferred into the fourth reaction zone, which is still one fluidized bed polymerization zone. From the fourth reaction zone the polymer is recovered and sent to further processing.

In any embodiment it is possible to feed additional catalyst components into any of the reaction zones. However, it is preferred that the solid catalyst component is introduced into the prepolymerization zone only and that no fresh solid catalyst component is added into any reaction zone. Thus, the solid catalyst component entering the reaction zone comes from the preceding reaction zone(s) only. However, additional cocatalyst and/or electron donor can be introduced into the reaction stages if necessary. This may be done, for instance, to increase the activity of the catalyst or to influence the isotacticity of the polymer.

In any embodiment described above may contain arrangements to remove at least a part of the reaction gas following the polymer before the polymer is introduced into a subsequent reaction zone. Any suitable arrangement known in the art may be used. For example, it is possible to flush the polymer stream transferred from a fluidized bed polymerization zone to a settled bed polymerization zone with the gas stream present in the settled bed reaction zone to remove the gases present in the fluidized bed polymerization zone. This may allow a more independent control of the reaction zones.

Extrusion

Typically the polymer is extruded and pelletised. The extrusion may be conducted in the manner generally known in the art, preferably in a twin screw extruder. One example of suitable twin screw extruders is a co-rotating twin screw extruder. Those are manufactured, among others, by Coperion or Japan Steel Works. Another example is a counter-rotating twin screw extruder.

The extruders typically include a melting section where the polymer is melted and a mixing section where the polymer melt is homogenised. Melting and homogenisation are achieved by introducing energy into the polymer. The more energy is introduced into the polymer the better homogenisation effect is achieved. However, too high energy incorporation causes the polymer to degrade and the mechanical properties to deteriorate. Suitable level of specific energy input (SEI) is from about 100 to about 450 kWh/ton polymer, preferably from 200 to 350 kWh/ton.

Typical average residence time of the polymer in the extruder is from about 30 seconds to about 10 minutes. This figure depends to some extent on the type of the extruder. However, for most extruder types values from 30 seconds to 5 minutes, such as from 40 seconds to about one and a half minutes, result in a good combination between homogeneity and mechanical properties of the polymer.

Suitable extrusion methods have been disclosed, among others, in EP-A-1600276, WO-A-03/076498 and WO 00/01473.

Before the extrusion the desired additives are mixed with the polymer. Examples of such additives are, among others, antioxidants, process stabilizers, UV-stabilizers, pigments, fillers, antistatic additives, antiblock agents, nucleating agents and acid scavengers. Suitable antioxidants and stabilizers are, for instance, alpha-tocopherol, tetrakis-[methylene-3-(3',5-di-tert-butyl-4'hydroxyphenyl)propionate]methane, tris(2,3-di-tert-butylphenyl)phosphite, octadecyl-3-3 (3'5'-di-tert-butyl-4'-hydroxyphenyl)propionate, dilaurylthiodipropionate, distearylthiodipropionate, tris-(nonylphenyl) phosphate, distearylpentaerythritol-diphosphite and tetrakis(2,4-di-tert-butylphenyl)-4,4'-biphenylene-diphosphonite.

Some hindered phenols are sold under the trade names of Irganox 1076 and Irganox 1010. Commercially available blends of antioxidants and process stabilizers are also available, such as Irganox B215 and Irganox B225 marketed by Ciba-Geigy.

Suitable acid scavengers are, for instance, metal stearates, such as calcium stearate and zinc stearate. They are used in amounts generally known in the art, typically from 300 ppm to 5000 ppm and preferably from 300 to 1000 ppm.

Especially preferably the composition contains a nucleating agent as discussed earlier in the text.

## EXAMPLES

### Melt Index, Melt Flow Rate (MI, MFR)

Melt Index (MI) or Melt Flow Rate (MFR)

The melt flow rate (MFR) is determined according to ISO 1133 and is indicated in g/10 min. The MFR is an indication of the melt viscosity of the polymer. The MFR is determined at 230 °C for PP. The load under which the melt flow rate is determined is usually indicated as a subscript, for instance $MFR_2$ is measured under 2.16 kg load, and MFR10 is measured under 10 kg load.

For the purpose of the present invention the melt flow rate of a blend component that cannot be directly measured ($MI_s$,) can be calculated from the melt flow rate of the blend ($MI_b$) and the melt flow rate of the other component ($MI_f$) by using the following formula (where all the melt indices are determined under the same load and at the same temperature):

$$MI_b^{-0.0965} = w_f \cdot MI_f^{-0.0965} + w_s \cdot MI_s^{-0.0965}$$

where $w_f$ and $w_s$ are the weight fractions of the components having melt flow rate $MI_f$ and $MI_s$, respectively.

Furthermore, if it was not possible to measure the melt flow rate $MFR_2$ because the value was too low, for the purpose of the present invention the $MFR_2$ can be calculated from $MFR_{10}$ as $MFR_2 = MFR_{10}/16$.

### Polydispersity index (PI)

The polydispersity index PI is calculated according to the following equation:

$$PI = 105\ Pa/G_C$$

wherein $G_C$ in Pa is the cross-over modulus at which $G'=G''=G_C$.

The rheology measurements have been made according to ISO 6721-1 and ISO 6721-10. Measurements were made at 200˚C. G' and G" indicate storage modulus and loss modulus, respectively. Measurements were made on a Physica MCR 300 rheometer with a plate-plate fixture, plate diameter 25 mm, and a distance between the plates of 1.8 mm.

The complex viscosity and complex modulus were obtained as a function of the frequency. In the present application the complex modulus is indicated as a subscript. Thus, $\eta_5$ denotes the viscosity at a value of complex modulus G* of 5 kPa. The SHI value is a ratio of two viscosities determined at different complex modulus, $SHI_{5/50} = \eta_5/\eta_{50}$, where $\eta_{50}$ denotes the complex viscosity at a complex modulus of 50 kPa.

## Charpy Impact Strength

Charpy notched impact strength was determined according to ISO 179-1:2000 according to conditions 1 eA on V-notched samples at 23˚C (Charpy impact strength (23˚C)) and -20 ˚C (Charpy impact strength (-20˚C)).

The test specimens were prepared by injection moulding as described in EN ISO 1873-2 (80 x 10 x 4mm).

## Tensile Strength

Tensile strength properties were determined according to ISO 527-2. Injection moulded specimens of type 1B were used having dimensions 170 (overall length) $\times 10 \times 4$ mm, where the specimens were moulded according to ISO 1873-2.

### Strain at Yield:

Strain at yield (in %) was determined according to ISO 527-2. The measurement was conducted at 23 ˚C temperature with an elongation rate of 50 mm/min.

### Stress at Yield:

Stress at yield (in MPa) was determined according to ISO 527-2. The measurement was conducted at 23 ˚C temperature with an elongation rate of 50 mm/min.

### Tensile Modulus

Tensile modulus (in MPa) was determined according to ISO 527-2. The measurement was conducted at 23 ˚C temperature with an elongation rate of 1 mm/min.

### Tensile Break:

Tensile break was determined according to ISO 527-2. The measurement was conducted at 23 ˚C temperature with an elongation rate of 50 mm/min.

## Comonomer Content from PP (FTIR)

Ethylene content in propylene polymer was measured by Fourier transmission infrared spectroscopy (FTIR). A thin film of the sample (thickness approximately 250 $\mu$m) was prepared by hot-pressing. The area of -CH2- absorption peak (800 - 650 cm-1) was measured with Perkin Elmer FTIR 1600 - spectrometer. The method was calibrated by ethylene content data measured by $^{13}$C NMR.

## Xylene Soluble

### Determination of xylene soluble fraction (XS):

2.0 g of polymer is dissolved in 250 ml p-xylene at 135 ˚C under agitation. After 30 minutes the solution is allowed to cool for 15 minutes at ambient temperature and then allowed to settle for 30 minutes at 25 ˚C. The solution is filtered with filter paper into two 100 ml flasks. The solution from the first 100 ml vessel is evaporated in nitrogen flow and the residue is dried under vacuum at 90 ˚C until constant weight is reached.

$XS\% = (100 \cdot m \cdot Vo)/(mo \cdot v)$; mo = initial polymer amount (g); m = weight of residue (g); Vo = initial volume (ml); v = volume of analyzed sample (ml).

Determination of amorphous rubber fraction of the xylene solubles (AM):

The solution from the second 100 ml flask in the xylene solubles analysis is treated with 200 ml of acetone under vigorous stirring. The precipitate is filtered and dried in a vacuum oven at 90 ˚C.

AM%=(100 x $m_2$ x $v_0$) / ($m_0$ x $V_1$), wherein
$m_0$= initial polymer amount (g)
$m_1$= weight of precipitate (g)
$v_0$= initial volume (ml)
$V_1$= volume of analyzed sample (ml)

**Intrinsic Viscosity (IV)**

Intrinsic Viscosity was measured according to DIN ISO 1628-1 (October 1999) in tetraline at 135 ˚C.

**Catalyst Preparation Example**

Preparation of the Solid Component

First, 0.1 mol of $MgCl_2$ x 3 EtOH was suspended under inert conditions in 250 ml of decane in a reactor at atmospheric pressure. The solution was cooled to the temperature of -15˚C and 300 ml of cold $TiCl_4$ was added while maintaining the temperature at said level. Then, the temperature of the slurry was increased slowly to 20 ˚C. At this temperature, 0.02 mol of dioctylphthalate (DOP) was added to the slurry. After the addition of the phthalate, the temperature was raised to 135 ˚C during 90 minutes and the slurry was allowed to stand for 60 minutes. Then, another 300 ml of $TiCl_4$ was added and the temperature was kept at 135 ˚C for 120 minutes. After this, the catalyst was filtered from the liquid and washed six times with 300 ml heptane at 80 ˚C. Then, the solid catalyst component was filtered and dried.

Prepolymerization with Vinylcyclohexane

The solid catalyst component was suspended in Drakeol 35 oil, supplied by Penreco, to produce a catalyst slurry containing 22.6 % by weight solids.
Triethylaluminium and dicyclopentyldimethoxysilane (DCPDMS) were then added to the slurry so that the molar ratio Al/Ti was 1.4 mol/mol and the molar ratio of triethylaluminium to DCPDMS was 7 mol/mol. Then, vinylcyclohexane (VCH) was added to the slurry in such an amount that the weight ratio of the vinylcyclohexane to the solid catalyst component was 1/1. The mixture was agitated and allowed to react until the content of the unreacted vinylcyclohexane in the reaction mixture was about 1000 ppm. The thus prepolymerized catalyst was then filtered and mixed with fresh Drakeol 35 to reach a catalyst concentration of 22 wt-%, calculated as solid transition metal component in oil.

**Example 1**

A stirred tank reactor having a volume of 45 $dm^3$ was operated as liquid-filled at a temperature of 50 ˚C and a pressure of 53 bar. Into the reactor was fed propylene so much that the average residence time in the reactor was 0.29 hours together with 0.05 g/h hydrogen and 2.2 g/h of a VCH-prepolymerized polymerization catalyst prepared according to Catalyst Preparation Example above with triethyl aluminium (TEA) as a cocatalyst and dicyclopentyldimethoxysilane (DCPDMS) as external donor so that the molar ratio of TEA/Ti was about 380 and TEA/DCPDMS was 4. Hydrogen was fed periodically in a total period of 20 minutes. For 15 minutes, the hydrogen feed was shut so that the feed was 0, and for 5 minutes the feed rate was kept at a level of 0.2 g/h. This cycle was repeated during the duration of the run. The slurry from this prepolymerization reactor was directed to a loop reactor having a volume of 150 $dm^3$ together with 194 kg/h of propylene. No fresh hydrogen was added but all the hydrogen came via the prepolymerization reactor. The loop reactor was operated at a temperature of 85 ˚C and a pressure of 53 bar. The production rate of propylene homopolymer was 14 kg/h and the melt flow rate $MFR_{10}$ was 0.42 g/10 min.
The polymer slurry from the loop reactor was directly conducted into a first gas phase reactor operated at a temperature of 95 ˚C and a pressure of 27 bar. Into the reactor were fed additional propylene and hydrogen, as well as nitrogen as an inert gas, so that the content of propylene was 73 % by mole and the ratio of hydrogen to propylene was 186 mol/kmol. The production rate in the reactor was 22 kg/h and the polymer withdrawn from the reactor had a melt flow rate $MFR_2$ of 1.25 g/10 min.
The reaction mixture from the first gas phase reactor was introduced into a second gas phase reactor operated at a temperature of 85 ˚C and a pressure of 30 bar together with additional propylene and nitrogen. The content of propylene was 42 % by mole and the ratio of hydrogen to propylene was 0.75 mol/kmol. The production rate in the reactor was 4 kg/h and the polymer withdrawn from the reactor had a melt flow rate $MFR_2$ of 1.18 g/10 min.

The reaction mixture from the second gas phase reactor was introduced into a third gas phase reactor operated at a temperature of 85 ˚C and a pressure of 30 bar, where additional propylene, hydrogen and ethylene as comonomer were introduced so that the content of propylene was 51 % by mole, the ratio of hydrogen to ethylene was 18 mol/kmol and the molar ratio of ethylene to propylene was 550 mol/kmol. The production rate in the reactor was 4 kg/h and the polymer withdrawn from the reactor had a melt flow rate $MFR_2$ of 0.93 g/10 min and an ethylene content of 4.5 % by weight.

The polymer withdrawn from the reactor was mixed with effective amounts of Irgafos 168, Irganox 1010 and calcium stearate. In addition 9000 ppm talc was added to the composition, based on the weight of the polymer. The mixture of polymer and additives was then extruded to pellets by using a ZSK70 extruder (product of Coperion).

The data of reactor conditions is shown in Table 1. The data of pelletized polymer is shown in Table 2.

### Example 2

The procedure of Example 1 was repeated except that the conditions were modified as disclosed in Table 1 and the maximum hydrogen feed was adjusted so that the average hydrogen feed into the prepolymerization reactor was 0.06 g/h. The polymer properties are shown in Table 2.

### Comparative Example 1

The procedure of Example 1 was repeated except that the hydrogen feed into the prepolymerization reactor was held at a constant value of 0.06 g/h, the temperature in the prepolymerization reactor was 40 ˚C, the conditions were modified as disclosed in Table 1 and the temperature in the third gas phase reactor was 83 ˚C. The polymer properties are shown in Table 2.

### Comparative Example 2

A stirred tank reactor having a volume of 45 $dm^3$ was operated as liquid-filled at a temperature of 40 ˚C and a pressure of 53 bar. Into the reactor was fed propylene so much that the average residence time in the reactor was 0.39 hours together with 0.5 g/h hydrogen and 5.2 g/h of a VCH-prepolymerized polymerization catalyst prepared according to Catalyst Preparation Example above with triethyl aluminium as a cocatalyst and dicyclopentyldimethoxysilane as external donor so that the molar ratio of TEA/Ti was 122 and TEA/DCPDMS was 5. The slurry from this prepolymerization reactor was directed to a loop reactor having a volume of 150 $dm^3$ together with 145 kg/h of propylene and 0.5 g/h hydrogen. The loop reactor was operated at a temperature of 85 ˚C and a pressure of 53 bar. The production rate of propylene homopolymer was 33 kg/h and the melt flow rate $MFR_{10}$ was 0.8 g/10 min.

The polymer slurry from the loop reactor was introduced into a first gas phase reactor operated at a temperature of 85 ˚C and a pressure of 25 bar. Into the reactor were fed additional propylene and hydrogen, as well as nitrogen as an inert gas. The production rate in the reactor was 29 kg/h and the polymer withdrawn from the reactor had a melt flow rate $MFR_2$ of 0.3 g/10 min.

The reaction mixture from the first gas phase reactor was introduced into a second gas phase reactor operated at a temperature of 70 ˚C and a pressure of 20 bar, where additional propylene, hydrogen and ethylene as comonomer were introduced so that the molar ratio of ethylene to propylene was 550 mol/kmol. The production rate in the reactor was 10 kg/h and the polymer withdrawn from the reactor had a melt flow rate $MFR_2$ of 0.25 g/10 min and an ethylene content of 5.0 % by weight.

The polymer withdrawn from the reactor was mixed with effective amounts of Irgafos 168, Irganox 1010 and calcium stearate. In addition 9000 ppm talc was added to the composition, based on the weight of the polymer. The mixture of polymer and additives was then extruded to pellets by using a ZSK70 extruder (product of Coperion).

The data of reactor conditions and production quality control samples is shown in Table 1. The data of pelletized polymer is shown in Table 2.

**Table 1: Process Data**

| | Example | 1 | 2 | CE1 | CE2 |
|---|---|---|---|---|---|
| Loop A | Propylene feed, kg/h | 194 | 194 | 194 | 145 |
| | Hydrogen feed, g/h[1] | 0.05 | 0.06 | 0.06 | 0.5 |
| | Production rate, kg/h | 14 | 14 | 14 | 33 |
| | $MFR_2$, g/10 min | 0.03 | 0.03 | 0.03 | 0.05 |
| | $MFR_{10}$, g/10 min | 0.42 | 0.50 | 0.5 | 0.8 |
| | A/(A+B+C), % | 35 | 35 | 29 | 53 |
| GPR1 B | Propylene concentration, mol-% | 73 | 73 | 83 | 63 |
| | H2/C3, mol/kmol | 186 | 179 | 1.2 | |
| | Production rate, kg/h | 22 | 22 | 28 | 29 |
| | $MFR_2$, g/10 min[2] | 1.25 | 1.7 | 0.14 | 0.29 |
| | $MFR_2$, calc, g/10 min[3] | 52 | 55 | 0.3 | 3.3 |
| | B/(A+B+C), % | 55 | 55 | 59[4] | 47 |
| GPR2 C | Propylene concentration, mol-% | 42 | 43 | 40 | - |
| | H2/C3, mol/kmol | 0.75 | 0.70 | 81 | - |
| | Production rate, kg/h | 4 | 4 | 6 | - |
| | $MFR_2$, g/10min[2] | 1.18 | 1.44 | 0.23 | |
| | $MFR_2$, calc, g/10 min[3] | 1.1 | 1.1 | 24 | - |
| | C/(A+B+C), % | 10 | 10 | 12[5] | - |
| GPR3 D | Propylene concentration, mol-% | 51 | 52 | 43 | ND |
| | H2/C2, mol/kmol | 18 | 17 | 20 | ND |
| | C2/C3, mol/kmol | 550 | 549 | 570 | 550 |
| | Production rate, kg/h | 4 | 5 | 6 | 16 |
| | $MFR_2$, g/10 min[2] | 0.93 | 0.89 | 0.24 | 0.25 |
| | $MFR_2$, calc, g/10 min[3] | ND | ND | ND | ND |
| | D/(A+B+C+D), % | 10 | 11 | 11 | 14 |
| | Split, U/G1/G2/G3 | 31/50/9/10 | 31/49/9/11 | 26/53/11/11 | 45/40/0/14 |

[1] No fresh hydrogen feed to loop; all hydrogen via prepol.
[2] MFR measured from the polymer leaving the reactor (including the polymers from preceding stages)
[3] Calculated MFR of the isolated polymer formed in the reactor (excluding the polymers from preceding stages)
[4] Component C
[5] Component B
ND = Not determined

**Table 2: Data of Polymer Compositions**

| Example | 1 | 2 | CE1 | CE2 |
|---|---|---|---|---|
| $MFR_2$, g/10 min | 1.2 | 1.1 | 0.21 | 0.25 |
| XS, % | 9.6 | 11.2 | 11.0 | 12 |
| Ethylene content, wt-% | 4.5 | 5 | 4 | ND |

(continued)

| Example | 1 | 2 | CE1 | CE2 |
|---|---|---|---|---|
| Ethylene content in AM, wt-% | 41 | 42 | 35 | ND |
| IV of AM, dl/g | 4.2 | 4.1 | 3.9 | ND |
| Tensile modulus, MPa | 2020 | 1970 | 1770 | 1690 |
| 2375-46.2·XS | 1931 | 1858 | 1867 | 1821 |
| PI | 19 | 19 | 5.1 | 3.5 |
| $\eta_5$, Pas | 37600 | 36300 | 94700 | 72300 |
| $SHI_{5/50}$ | 30 | 30 | 6.4 | 4.4 |
| Charpy RT, kJ/m | 7.5 | 7.3 | 79 | 69 |
| Charpy 0 ˚C, kJ/m$^2$ | 5.6 | 5.3 | 12 | 14 |
| Charpy -20 ˚C, kJ/m$^2$ | 3.1 | 4.3 | 5.9 | 3.5 |

Comparative Example 2 shows that when the component (C) was missing the molecular weight distribution was narrow, as indicated by the low value of PI, and the desired balance between the stiffness and the impact strength at low temperature was thus not obtained. The tensile modulus was only 1690 MPa, compared to 1970 MPa of Example 2. The same is true if the fraction of component (B) was too low, as shown by Comparative Example 1. There components (B) and (C) were present in amounts of 12 and 59 %, respectively. While the flexural modulus was somewhat higher than that of Comparative Example 2, it anyway was clearly lower than that of Examples 1 and 2.

It is thus clear that sufficient broadness of molecular weight distribution is needed to achieve the benefits of the present invention.

## Claims

1. A multimodal polymer of propylene comprising a matrix of semicrystalline polymer and a rubber (D) dispersed in said matrix, the multimodal polymer comprising units derived from propylene of from 85 to 99 % by weight and units derived from ethylene or $C_4$ to $C_{10}$ alpha-olefins of from 1 to 15 % by weight, **characterized in that** the multimodal polymer has

   a fraction soluble in xylene at a temperature of 25 ˚C XS of from 7 to 16 % by weight;
   a melt flow rate $MFR_2$ of from 0.05 to 5 g/10 min determined according to ISO 1133 under a load of 2.16 kg at a temperature of 230 ˚C;
   a polydispersity index PI, given by dynamic rheology measurement as PI=105 Pa/$G_c$, where $G_C$ is the cross-over modulus at which G' = G" = $G_C$, of from 3.5 to 30;
   a tensile modulus TM in MPa and XS in weight-% meeting the relationship TM $\geq$ 2375 - 46.2·XS,
   where the tensile modulus TM is determined according to ISO 527-2 and XS is the polymer fraction soluble in xylene at a temperature of 25 ˚C in weight-%.

2. The multimodal polymer according to claim 1, **characterized in that** the tensile modulus TM in MPa and XS in weight-% meet the relationship
   TM $\geq$ 2375 - 46.2·XS if XS<10.3 or
   TM $\geq$ 1900 if XS $\geq$ 10.3.

3. The multimodal polymer according to claim 1 or claim 2, **characterized in that** the multimodal polymer has a polydispersity index PI of from 5 to 30, preferably from 7 to 30.

4. The multimodal polymer according to any one of the preceding claims having the XS of from 8 to 14 % by weight, preferably from 8 to 12 % by weight, **characterized in that** the matrix is a propylene homopolymer.

5. The multimodal polymer according to any one of the preceding claims **characterized in that** said matrix comprises

   (A) a first propylene homopolymer having a melt flow rate $MFR_2$ of from 0.001 to 0.1 g/10 min or a melt flow

rate $MFR_{10}$ determined under a load of 10 kg at 230 ˚C according to ISO 1133 of from 0.1 to 1.0 g/10 min;
(B) a second propylene homopolymer having a melt flow rate $MFR_2$ of from 10 to 100 g/10 min;
(C) a third propylene homopolymer having a melt flow rate $MFR_2$ of from 0.1 to 5 g/10 min.

6. The multimodal polymer according to claim 5 **characterized in that** the multimodal polymer comprises from 7 to 16 % by weight of the rubber (D) and from 84 to 93 % by weight of the matrix.

7. The multimodal polymer according to claim 6 wherein the matrix comprises from 5 to 50 % by weight of (A); from 30 to 70 % by weight of (B); and from 5 to 35 % by weight of (C).

8. The multimodal polymer according to any one of claims 5 to 7 **characterized in that** the third propylene homopolymer (C) has a melt flow rate $MFR_2$ of from 0.1 to 1 g/10 min, preferably from 0.1 to 0.5 g/10 min.

9. The multimodal polymer according to any one of the preceding claims wherein the matrix has a melt flow rate $MFR_2$ of from 0.2 to 2.0 g/10 min.

10. The multimodal polymer according to any one of the preceding claims wherein the multimodal polymer has a melt flow rate $MFR_2$ of from 0.2 to 2.0 g/10 min.

11. A composition comprising the multimodal polymer according to any one of claims 1 to 10.

12. The composition according to claim 11 **characterized in that** the composition comprises a nucleating agent.

13. The composition according to claim 12 wherein the nucleating agent is selected from the group consisting of talc, dibenzylidene sorbitol (DBS), nanoclay such as montmorillonate, sodium benzoate, sodium salt of 4-tert-butylbenzoic acid, sodium salt of adipic acid, sodium salt of diphenylacetic acid, sodium succinate, poly(vinylcyclohexane) and poly(3-methyl-1-butene).

14. The composition according to claim 12 or claim 13 wherein the nucleating agent is present in an amount of from 0.00001 to 3 % by weight.

15. A process for producing the composition according to any one of claims 11 to 14, said process comprising:

> - feeding polymerization catalyst to a first polymerization zone;
> - feeding propylene to the first polymerization zone;
> - maintaining the first polymerization zone in conditions to polymerize propylene in the presence of said catalyst to polypropylene;
> - continuously or intermittently discharging a portion of reaction mixture comprising unreacted propylene, polypropylene and polymerization catalyst from the first reaction zone;
> - feeding polymerization catalyst to a second polymerization zone;
> - feeding propylene and hydrogen to the second polymerization zone;
> - maintaining the second polymerization zone in conditions to polymerize propylene in the presence of said catalyst to polypropylene;
> - continuously or intermittently withdrawing a portion of the mixture contained in the second reaction zone;
> - feeding polymerization catalyst to a third polymerization zone;
> - feeding propylene and optionally hydrogen to the third polymerization zone;
> - maintaining the third polymerization zone in conditions to polymerize propylene in the presence of said catalyst to polypropylene;
> - continuously or intermittently withdrawing a portion of the mixture contained in the third reaction zone;
> - feeding polymerization catalyst to a fourth polymerization zone;
> - feeding propylene, alpha-olefin comonomer and optionally hydrogen to the fourth polymerization zone;
> - maintaining the fourth polymerization zone in conditions to copolymerize propylene and the alpha-olefin comonomer in the presence of said catalyst to an elastomeric copolymer of propylene;
> - continuously or intermittently withdrawing a portion of the mixture contained in the fourth reaction zone;
> - recovering the polymer
> - mixing the recovered polymer with at least one additive to produce a mixture of polymer and at least one additive; and
> - extruding said mixture into pellets,

wherein said first, second, third and fourth reaction zones are cascaded so that the polymer form a preceding zone is transferred to a subsequent reaction zone together with the active catalyst dispersed in said polymer, and where a part of the polymer may be returned from a subsequent zone to a preceding zone, and wherein said first, second, third and fourth reaction zones may be arranged in any order.

16. The process according to claim 15, **characterized in that** at least one reaction zone is a gas phase polymerization zone comprising a bed of polymer particles surrounded by a gaseous phase comprising propylene.

17. The process according to claim 16, **characterized in that** at least two reaction zones are gas phase reaction zones arranged as a combination of a fluidized bed zone comprising a bed of polymer particles suspended in an upwards moving gas stream comprising propylene and a settled bed zone comprising a downwards moving bed of polymer particles surrounded by gas comprising propylene, or as a combination of a fast fluidized bed zone comprising a bed of polymer particles transported by an upwards moving gas stream comprising propylene and a settled bed zone and wherein at least a part of the polymer withdrawn from said fluidized bed zone or said fast fluidized bed zone is transferred into said settled bed zone and at least a part of the polymer withdrawn from said settled bed zone is transferred into said fluidized bed zone or fast fluidized bed zone.

18. The process according to claim 17 wherein said fluidized bed zone or fast fluidized bed zone is a fluidized bed zone.

19. The process according to any one of claims 15 to 18 **characterized in that** at least one reaction zone is a slurry polymerization zone comprising fluid phase which is a liquid phase or a supercritical fluid phase and polymer particles suspended in said fluid phase.

20. The process according to claim 19 **characterized in that** the slurry withdrawn from the slurry polymerization zone is directly conducted into the polymer bed of the fluidized bed zone or the fast fluidized bed zone without separating said liquid phase from said polymer particles prior to introducing said slurry into said polymer bed.

21. The process according to any one of the claims 15 to 20, **characterized in that** the polymerization catalyst comprises a solid component containing titanium and magnesium and it is used together with an aluminium alkyl cocatalyst and an external electron donor.

22. The process according to claim 21 wherein the solid component has been prepolymerized with vinylcyclohexane so that it contains from 0.01 to 5 grams of poly(vinylcyclohexane) per one gram of solid catalyst component.

23. The process according to claim 21 or claim 22 comprising the steps of

- combining the solid catalyst component, aluminium alkyl cocatalyst and external electron donor;
- conducting the combined catalyst components into a prepolymerization zone together with propylene monomer to effect a prepolymerization of propylene on the solid catalyst component in slurry at a temperature of from 0 to 60 ˚C;
- continuously or intermittently withdrawing slurry from the prepolymerization zone; and
- directing the slurry withdrawn from the prepolymerization zone into a polymerization zone.

24. The process according to any one of claims 15 to 23 **characterized in that** the hydrogen feed of at least one reaction zone oscillates so that the hydrogen feed is maintained at a maximum value Flax for a time period of $t_1$ and at a minimum value $F_{min}$ for a time period of $t_2$, wherein the difference $F_{max}$-$F_{min} \geq 0.5\ F_{avg}$, where $F_{avg}$ is the average hydrogen feed to said reaction zone, and $2 \cdot \tau \geq t_1 + t_2 \geq 0.05 \cdot \tau$, where $\tau$ is the average residence time of the polymer in said reaction zone and where preferably $F_{min} = 0$.

**Patentansprüche**

1. Multimodales Polymer von Propylen, umfassend eine Matrix aus einem halbkristallinen Polymer und einen in der Matrix verteilten Kautschuk (D), wobei das multimodale Polymer Einheiten, die von Propylen stammen, mit 85 bis 99 Gew.-% und Einheiten, die von Ethylen oder $C_4$-$C_{10}$-$\alpha$-Olefinen stammen, mit 1 bis 15 Gew.-% aufweist, **dadurch gekennzeichnet, daß** das multimodale Polymer folgendes aufweist:

einen Anteil, der in Xylol bei einer Temperatur von 25˚C löslich ist, XS mit 7 bis 16 Gew.-%;

eine Schmelzfließrate $MFR_2$ von 0,05 bis 5 g/10 min, und zwar gemäß ISO 1133 unter einer Last von 2,16 kg bei einer Temperatur von 230˚C bestimmt;

einen Polydispersitäts-Index PI von 3,5 bis 30, der durch dynamische Rheologiemessung als PI = 105 Pa/$G_c$, angegeben wird,

wobei $G_c$ der Crossover-Modul ist, bei dem G' = G" = $G_c$ ist;

einen Zugmodul TM in MPa und einen XS in Gew.-%, die in folgendem Zusammenhang stehen:

$$TM \geq 2375 - 46{,}2 \cdot XS,$$

wobei der Zugmodul TM gemäß ISO 527-2 bestimmt wird und XS der in Xylol bei einer Temperatur von 25˚C lösliche Polymeranteil in Gew.-% ist.

**2.** Multimodales Polymer nach Anspruch 1, **dadurch gekennzeichnet, daß** der Zugmodul TM in MPa und XS in Gew.-% in folgendem Zusammenhang stehen:

$$TM \geq 2375 - 46{,}2 \cdot XS, \text{ wenn } XS < 10{,}3 \text{ oder}$$
$$TM \geq 1900, \text{ wenn } XS \geq 10{,}3 \text{ ist.}$$

**3.** Multimodales Polymer nach Anspruch 1 oder Anspruch 2, **dadurch gekennzeichnet, daß** das multimodale Polymer einen Polydispersitäts-Index PI von 5 bis 30, vorzugsweise von 7 bis 30 aufweist.

**4.** Multimodales Polymer nach einem der vorstehenden Ansprüche, das einen XS von 8 bis 14 Gew.-%, vorzugsweise von 8 bis 12 Gew.-% aufweist, **dadurch gekennzeichnet, daß** die Matrix ein Propylenhomopolymer ist.

**5.** Multimodales Polymer nach einem der vorstehenden Ansprüche, **dadurch gekennzeichnet, daß** die Matrix folgendes aufweist:

(A) ein erstes Propylenhomopolymer mit einer Schmelzfließrate $MFR_2$ von 0,001 bis 0,1 g/10 min oder einer Schmelzfließrate $MFR_{10}$, die gemäß ISO 1133 unter einer Last von 10 kg bei 230˚C bestimmt wird, von 0,1 bis 1,0 g/10 min;
(B) ein zweites Propylenhomopolymer mit einer Schmelzfließrate $MFR_2$ von 10 bis 100 g/10 min;
(C) ein drittes Propylenhomopolymer mit einer Schmelzfließrate $MFR_2$ von 0,1 bis 5 g/10 min.

**6.** Multimodales Polymer nach Anspruch 5, **dadurch gekennzeichnet, daß** das multimodale Polymer 7 bis 16 Gew.-% des Kautschuks (D) und 84 bis 93 Gew.-% der Matrix aufweist.

**7.** Multimodales Polymer nach Anspruch 6, wobei die Matrix 5 bis 50 Gew.-% (A), 30 bis 70 Gew.-% (B) und 5 bis 35 Gew.-% (C) aufweist.

**8.** Multimodales Polymer nach einem der Ansprüche 5 bis 7, **dadurch gekennzeichnet, daß** das dritte Propylenhomopolymer (C) eine Schmelzfließrate $MFR_2$ von 0,1 bis 1 g/10 min, vorzugsweise von 0,1 bis 0,5 g/10 min aufweist.

**9.** Multimodales Polymer nach einem der vorstehenden Ansprüche, wobei die Matrix eine Schmelzfließrate $MFR_2$ von 0,2 bis 2,0 g/10 min aufweist.

**10.** Multimodales Polymer nach einem der vorstehenden Ansprüche, wobei das multimodale Polymer eine Schmelzfließrate $MFR_2$ von 0,2 bis 2,0 g/10 min aufweist.

**11.** Zusammensetzung, die das multimodale Polymer nach einem der Ansprüche 1 bis 10 umfaßt.

**12.** Zusammensetzung nach Anspruch 11, **dadurch gekennzeichnet, daß** die Zusammensetzung einen Keimbildner aufweist.

**13.** Zusammensetzung nach Anspruch 12, wobei der Keimbildner aus der Gruppe ausgewählt ist, bestehend aus Talkum, Dibenzylidensorbitol (DBS), Nanoton, wie Montmorillonat, Natriumbenzoat, ein Natriumsalz von 4-tert-Butylbenzoesäure, ein Natriumsalz von Adipinsäure, ein Natriumsalz von Diphenylessigsäure, Natriumsuccinat, Poly(vinylcyclohexan) und Poly(3-methyl-1-buten).

**14.** Zusammensetzung nach Anspruch 12 oder Anspruch 13, wobei der Keimbildner in einer Menge von 0,00001 bis 3 Gew.-% vorliegt.

15. Verfahren zum Herstellen der Zusammensetzung nach einem der Ansprüche 11 bis 14, wobei das Verfahren folgendes aufweist:

- Einführen von Polymerisationskatalysator in eine erste Polymerisationszone;
- Einführen von Propylen in die erste Polymerisationszone;
- Halten der ersten Polymerisationszone unter Bedingungen, so daß Propylen in Gegenwart des Katalysators zu Polypropylen polymerisiert;
- kontinuierliches oder diskontinuierliches Austragen eines Teils des Reaktionsgemischs, das unreagiertes Propylen, Polypropylen und Polymerisationskatalysator umfaßt, aus der ersten Reaktionszone;
- Einführen von Polymerisationskatalysator in eine zweite Polymerisationszone;
- Einführen von Propylen und Wasserstoff in die zweite Polymerisationszone;
- Halten der zweiten Polymerisationszone unter Bedingungen, so daß Propylen in Gegenwart des Katalysators zu Polypropylen polymerisiert;
- kontinuierliches oder diskontinuierliches Abziehen eines Teils des in der zweiten Reaktionszone enthaltenen Gemischs;
- Einführen von Polymerisationskatalysator in eine dritte Polymerisationszone;
- Einführen von Propylen und gegebenenfalls Wasserstoff in die dritte Polymerisationszone;
- Halten der dritten Polymerisationszone unter Bedingungen, so daß Propylen in Gegenwart des Katalysators zu Polypropylen polymerisiert;
- kontinuierliches oder diskontinuierliches Abziehen von einem Teil des in der dritten Reaktionszone enthaltenen Gemischs;
- Einführen von Polymerisationskatalysator in eine vierte Polymerisationszone;
- Einführen von Propylen, Comonomer aus α-Olefin und gegebenenfalls Wasserstoff in die vierte Polymerisationszone;
- Halten der vierten Polymerisationszone unter Bedingungen, so daß Propylen und das Comonomer aus α-Olefin in Gegenwart des Katalysators zu einem elastomeren Copolymer von Propylen copolymerisieren;
- kontinuierliches oder diskontinuierliches Abziehen von einem Teil des in der vierten Reaktionszone enthaltenen Gemischs;
- Gewinnen des Polymers;
- Mischen des gewonnenen Polymers mit zumindest einem Zusatz, so daß ein Gemisch aus Polymer und zumindest einem Zusatz erzeugt wird; und
- Extrudieren des Gemischs zu Granulat;

wobei die erste, die zweite, die dritte und die vierte Reaktionszone in Kaskaden verbunden sind, so daß das Polymer aus einer vorhergehenden Zone zusammen mit dem im Polymer verteilten aktiven Katalysator zu einer nachfolgenden Reaktionszone übertragen wird, und wobei ein Teil des Polymers aus einer nachfolgenden Zone zu einer vorhergehenden Zone zurückgeleitet werden kann, und wobei die erste, die zweite, die dritte und die vierte Reaktionszone in irgendeiner Reihenfolge angeordnet sein können.

16. Verfahren nach Anspruch 15, **dadurch gekennzeichnet, daß** zumindest eine Reaktionszone eine Gasphasenpolymerisationszone ist, die ein Bett von Polymerpartikeln aufweist, die von einer Gasphase umgeben sind, die Propylen umfaßt.

17. Verfahren nach Anspruch 16, **dadurch gekennzeichnet, daß** mindestens zwei Reaktionszonen Gasphasenreaktionszonen sind, die als eine Kombination aus einer Wirbelbettzone, die ein Bett von Polymerpartikeln umfaßt, die in einem sich nach oben bewegenden Gasstrom suspendiert sind, der Propylen umfaßt, und einer Zone aus einem abgesetzten Bett angeordnet sind, die ein sich nach unten bewegendes Bett von Polymerpartikeln aufweist, die von einem Gas umgeben sind, das Propylen umfaßt, oder als eine Kombination aus einer Zone mit einem schnell verwirbelten Bett, das ein Bett von Polymerpartikeln aufweist, die von einem sich nach oben bewegenden Gasstrom transportiert werden, der Propylen umfaßt und einer Zone aus einem abgesetzten Bett angeordnet sind, und wobei zumindest ein Teil des aus der Wirbelbettzone oder der Zone mit dem schnell verwirbelten Bett abgezogenen Polymers in die Zone mit dem abgesetzten Bett übertragen wird und zumindest ein Teil des aus der Zone mit dem abgesetzten Bett abgezogenen Polymers in die Wirbelbettzone oder die Zone mit dem schnell verwirbelten Bett übertragen wird.

18. Verfahren nach Anspruch 17, wobei die Wirbelbettzone oder die Zone mit dem schnell verwirbelten Bett eine Wirbelbettzone ist.

**19.** Verfahren nach einem der Ansprüche 15 bis 18, **dadurch gekennzeichnet, daß** zumindest eine Reaktionszone eine Suspensionspolymerisationszone ist, die eine fluide Phase aufweist, die eine flüssige Phase oder eine superkritische fluide Phase ist, und Polymerpartikel in der fluiden Phase suspendiert sind.

**20.** Verfahren nach Anspruch 19, **dadurch gekennzeichnet, daß** die aus der Suspensionspolymerisationszone abgezogene Suspension direkt in das Polymerbett der Wirbelbettzone oder der Zone mit dem schnell verwirbelten Bett geleitet wird, ohne daß die flüssige Phase von den Polymerpartikeln abgetrennt wird, bevor die Suspension in das Polymerbett eingeführt wird.

**21.** Verfahren nach einem der Ansprüche 15 bis 20, **dadurch gekennzeichnet, daß** der Polymerisationskatalysator eine feste Komponente aufweist, die Titan und Magnesium enthält, und zusammen mit einem Aluminiumalkyl-Cokatalysator und einem externen Elektronendonor verwendet wird.

**22.** Verfahren nach Anspruch 21, wobei die feste Komponente mit Vinylcyclohexan vorpolymerisiert worden ist, so daß sie 0,01 bis 5 g Poly(vinylcyclohexan) pro 1 Gramm der festen Katalysatorkomponente enthält.

**23.** Verfahren nach Anspruch 21 oder Anspruch 22, das die folgenden Schritt aufweist:

- Kombinieren der festen Katalysatorkomponente, des Aluminiumalkyl-Cokatalysators und des externen Elektronendonors;
- Leiten der kombinierten Katalysatorkomponenten zusammen mit Propylenmonomer in eine Vorpolymerisationszone, so daß eine Vorpolymerisation von Propylen auf der festen Katalysatorkomponente in einer Suspension bei einer Temperatur von 0 bis 60˚C erfolgt;
- kontinuierliches oder diskontinuierliches Abziehen der Suspension aus der Vorpolymerisationszone; und
- Leiten der aus der Vorpolymerisationszone abgezogenen Suspension in eine Polymerisationszone.

**24.** Verfahren nach einem der Ansprüche 15 bis 23, **dadurch gekennzeichnet, daß** die Wasserstoffbeschickung von zumindest einer Reaktionszone schwankt, so daß die Wasserstoffbeschickung für einen Zeitraum $t_1$ bei einem Höchstwert $F_{max}$ und für einen Zeitraum $t_2$ bei einem Mindestwert $F_{min}$ gehalten wird, wobei die Differenz $F_{max} - F_{min} \geq 0,5 \cdot F_{avg}$ ist, wobei $F_{avg}$ die durchschnittliche Wasserstoffbeschickung zu dieser Reaktionszone ist, und $2 \cdot \tau \geq t_1 + t_2 \geq 0,05 \cdot \tau$, wobei $\tau$ die durchschnittliche Verweilzeit des Polymers in der Reaktionszone ist und wobei $F_{min}$ vorzugsweise gleich 0 ist.

**Revendications**

**1.** Polymère multimodal de propylène comprenant une matrice de polymère semicristallin et un caoutchouc (D) dispersé dans ladite matrice, le polymère multimodal comprenant des unités dérivées de propylène de 85 % à 99 % en poids et des unités dérivées d'éthylène ou d'alpha-oléfines en $C_4$ à $C_{10}$ de 1 % à 15 % en poids, **caractérisé en ce que** le polymère multimodal possède
une fraction soluble dans le xylène à une température de 25˚C XS de 7 % à 16 % en poids ;
un indice de fluidité $MFR_2$ de 0,05 à 5 g/10 min déterminé selon la norme ISO 1133 sous une charge de 2,16 kg à une température de 230˚C ;
un indice de polydispersité PI, donné par la mesure de rhéologie dynamique par PI = 105 Pa/$G_C$, où $G_C$ est le module de recouvrement pour lequel G' = G" = $G_C$, de 3,5 à 30 ;
un module de traction TM en MPa et XS en % en poids satisfaisant la relation TM $\geq$ 2375 - 46,2 XS,
où le module de traction TM est déterminé selon la norme ISO 527-2 et XS est la fraction de polymère soluble dans le xylène à une température de 25˚C en % en poids.

**2.** Polymère multimodal selon la revendication 1, **caractérisé en ce que** le module de traction TM en MPa et XS en % en poids satisfont la relation
TM $\geq$ 2375 - 46,2 XS si XS < 10,3 ou
TM $\geq$ 1900 si XS $\geq$ 10,3.

**3.** Polymère multimodal selon la revendication 1 ou la revendication 2, **caractérisé en ce que** le polymère multimodal possède un indice de polydispersité PI de 5 à 30, de préférence de 7 à 30.

**4.** Polymère multimodal selon l'une quelconque des revendications précédentes ayant le XS de 8 % à 14 % en poids, de préférence de 8 % à 12 % en poids, **caractérisé en ce que** la matrice est un homopolymère de propylène.

5. Polymère multimodal selon l'une quelconque des revendications précédentes **caractérisé en ce que** ladite matrice comprend

(A) un premier homopolymère de propylène ayant un indice de fluidité $MFR_2$ de 0,001 à 0,1 g/10 min ou un indice de fluidité $MFR_{10}$ déterminé sous une charge de 10 kg à 230˚C selon la norme ISO 1133 de 0,1 à 1,0 g/10 min ;
(B) un deuxième homopolymère de propylène ayant un indice de fluidité $MFR_2$ de 10 à 100 g/10 min;
(C) un troisième homopolymère de propylène ayant un indice de fluidité $MFR_2$ de 0,1 à 5 g/10 min.

6. Polymère multimodal selon la revendication 5 **caractérisé en ce que** le polymère multimodal comprend de 7 % à 16 % en poids du caoutchouc (D) et de 84 % à 93 % en poids de la matrice.

7. Polymère multimodal selon la revendication 6, dans lequel la matrice comprend de 5 % à 50 % en poids de (A) ; de 30 % à 70 % en poids de (B) ; et de 5 % à 35 % en poids de (C).

8. Polymère multimodal selon l'une quelconque des revendications 5 à 7, **caractérisé en ce que** le troisième homopolymère de propylène (C) présente un indice de fluidité $MFR_2$ de 0,1 à 1 g/10 min, de préférence de 0,1 à 0,5 g/10 min.

9. Polymère multimodal selon l'une quelconque des revendications précédentes, dans lequel la matrice présente un indice de fluidité $MFR_2$ de 0,2 à 2,0 g/10 min.

10. Polymère multimodal selon l'une quelconque des revendications précédentes, dans lequel le polymère multimodal présente un indice de fluidité $MFR_2$ de 0,2 à 2,0 g/10 min.

11. Composition comprenant le polymère multimodal selon l'une quelconque des revendications 1 à 10.

12. Composition selon la revendication 11 **caractérisée en ce que** la composition comprend un agent de nucléation.

13. Composition selon la revendication 12, dans laquelle l'agent de nucléation est choisi parmi le groupe consistant en talc, dibenzylidène sorbitol (DBS), nano-argile tel que le montmorillonate, benzoate de sodium, sel de sodium de l'acide 4-tert-butylbenzoïque, sel de sodium de l'acide adipique, sel de sodium de l'acide diphénylacétique, succinate de sodium, poly(vinylcyclohexane) et poly(3-méthyl-1-butène).

14. Composition selon la revendication 12 ou la revendication 13, dans laquelle l'agent de nucléation est présent dans une quantité de 0,00001 % à 3 % en poids.

15. Procédé de production de la composition selon l'une quelconque des revendications 11 à 14, ledit procédé consistant à :

- alimenter un catalyseur de polymérisation à une première zone de polymérisation;
- alimenter du propylène à la première zone de polymérisation;
- maintenir la première zone de polymérisation dans des conditions pour polymériser du propylène en présence dudit catalyseur en polypropylène ;
- prélever de manière continue ou intermittente une partie du mélange réactionnel comprenant du propylène n'ayant pas réagi, du polypropylène et le catalyseur de polymérisation de la première zone réactionnelle ;
- alimenter le catalyseur de polymérisation à une deuxième zone de polymérisation ;
- alimenter du propylène et de l'hydrogène à la deuxième zone de polymérisation ;
- maintenir la deuxième zone de polymérisation dans des conditions pour polymériser du propylène en présence dudit catalyseur en polypropylène ;
- prélever de manière continue ou intermittente une partie du mélange contenu dans la deuxième zone réactionnelle ;
- alimenter le catalyseur de polymérisation à une troisième zone de polymérisation ;
- alimenter du propylène et éventuellement de l'hydrogène à la troisième zone de polymérisation ;
- maintenir la troisième zone de polymérisation dans des conditions pour polymériser du propylène en présence dudit catalyseur en polypropylène ;
- prélever de manière continue ou intermittente une partie du mélange contenu dans la troisième zone réactionnelle ;
- alimenter le catalyseur de polymérisation à une quatrième zone de polymérisation ;
- alimenter du propylène, un comonomère d'alpha-oléfine et éventuellement de l'hydrogène à la quatrième zone de polymérisation ;
- maintenir la quatrième zone de polymérisation dans des conditions pour polymériser du propylène et le comonomère d'alpha-oléfine en présence dudit catalyseur en un copolymère élastomère de propylène ;
- prélever de manière continue ou intermittente une partie du mélange contenu dans la quatrième zone réactionnelle ;
- récupérer le polymère ;
- mélanger le polymère récupéré avec au moins un additif pour produire un mélange de polymère et au moins un additif ; et
- extruder ledit mélange en granulés ;
où lesdites première, deuxième, troisième et quatrième zones réactionnelles sont agencées en cascade de sorte que le polymère provenant d'une zone précédente est transféré à une zone réactionnelle suivante conjointement avec le catalyseur actif dispersé dans ledit polymère, et où une partie du polymère peut être renvoyée à partir d'une zone suivante vers une zone précédente, et où lesdites première, deuxième, troisième et quatrième zones réactionnelles peuvent être agencées dans un ordre quelconque.

16. Procédé selon la revendication 15, **caractérisé en ce qu'**au moins une zone réactionnelle est une zone de polymérisation en phase gazeuse comprenant un lit de particules de polymère entouré par une phase gazeuse comprenant du propylène.

17. Procédé selon la revendication 16, **caractérisé en ce qu'**au moins deux zones réactionnelles sont des zones réactionnelles en phase gazeuse agencées sous forme d'une combinaison d'une zone à lit fluidisé comprenant un lit de particules de polymère en suspension dans un courant gazeux se déplaçant vers le haut comprenant du propylène et d'une zone à lit stationnaire comprenant un lit de particules de polymère se déplaçant vers le bas entouré par un gaz comprenant du propylène, ou sous forme d'une combinaison d'une zone à lit fluidisé rapide comprenant un lit de particules de polymère transporté par un courant gazeux se déplaçant vers le haut comprenant du propylène et d'une zone à lit stationnaire et où au moins une partie du polymère prélevé à partir de ladite zone à lit fluidisé ou de ladite zone à lit fluidisé rapide est transférée dans ladite zone à lit stationnaire et au moins une partie du polymère prélevé à partir de ladite zone à lit stationnaire est transférée dans ladite zone à lit fluidisé ou ladite zone à lit fluidisé rapide.

18. Procédé selon la revendication 17, dans lequel ladite zone à lit fluidisé ou ladite zone à lit fluidisé rapide est une zone à lit fluidisé.

19. Procédé selon l'une quelconque des revendications 15 à 18 **caractérisé en ce qu'**au moins une zone réactionnelle est une zone de polymérisation en suspension comprenant une phase fluidisée qui est une phase liquide ou une phase fluide supercritique et des particules de polymère en suspension dans ladite phase fluide.

20. Procédé selon la revendication 19 **caractérisé en ce que** la suspension prélevée à partir de la zone de polymérisation en suspension est dirigée directement dans le lit de polymère de la zone à lit fluidisé ou de la zone à lit fluidisé rapide sans séparer ladite phase liquide desdites particules de polymère avant d'introduire ladite suspension dans ledit lit de polymère.

21. Procédé selon l'une quelconque des revendications 15 à 20, **caractérisé en ce que** le catalyseur de polymérisation comprend un composant solide contenant du titane et du magnésium et il est utilisé conjointement avec un co-catalyseur d'aluminium alkyle et un donneur d'électron externe.

22. Procédé selon la revendication 21, dans lequel le composant solide a été prépolymérisé avec du vinylcyclohexane de sorte qu'il contient de 0,01 à 5 grammes de poly(vinylcyclohexane) par gramme de composant de catalyseur solide.

23. Procédé selon la revendication 21 ou la revendication 22 comprenant les étapes consistant à :

- combiner le composant de catalyseur solide, le co-catalyseur d'aluminium alkyle et le donneur d'électron externe ;
- introduire les composants de catalyseur combinés dans une zone de pré-polymérisation conjointement avec le monomère de propylène pour réaliser une pré-polymérisation du propylène sur le composant de catalyseur solide en suspension à une température de 0° C à 60° C ;
- prélever de manière continue ou intermittente la suspension à partir de la zone de pré-polymérisation ; et
- diriger la suspension prélevée à partir de la zone de pré-polymérisation dans une zone de polymérisation.

**24.** Procédé selon l'une quelconque des revendications 15 à 23 **caractérisé en ce que** l'alimentation en hydrogène d'au moins une zone réactionnelle varie de sorte que l'alimentation en hydrogène est maintenue à une valeur maximale $F_{max}$ pendant une période de temps de $t_1$ et à une valeur minimale $F_{min}$ pendant une période de temps de $t_2$, où la différence $F_{max} - F_{min} \geq 0,5\ F_{avg}$, où $F_{avg}$ est l'alimentation moyenne en hydrogène à ladite zone réactionnelle, et $2\tau \geq t_1 + \geq t_2\ 0,05\tau$, où $\tau$ est le temps de séjour moyen du polymère dans ladite zone réactionnelle et où de préférence $F_{min}=0$.

**Figure 1**

# EP 2 223 943 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1364986 A
- EP 1724303 A
- EP 1632529 A
- US 20050187367 A
- EP 573862 A
- EP 1026184 A
- WO 2005014713 A
- WO 8707620 A
- WO 9221705 A
- WO 9311165 A
- WO 9311166 A
- WO 9319100 A
- WO 9736939 A
- WO 9812234 A
- WO 9933842 A
- WO 03000756 A
- WO 03000757 A
- WO 03000754 A
- WO 2004029112 A
- WO 9219659 A
- WO 9219653 A
- WO 9219658 A
- US 4347160 A
- US 4382019 A
- US 4435550 A
- US 4465782 A
- US 4473660 A
- US 4530912 A
- US 4560671 A
- WO 9532994 A
- US 4107414 A
- US 4186107 A
- US 4226963 A
- US 4472524 A
- US 4522930 A
- US 4532313 A
- US 4657882 A
- US 4581342 A
- EP 45976 A
- EP 45977 A
- EP 607703 A
- EP 1028984 A
- EP 1028985 A
- EP 1030878 A
- WO 2006063771 A
- EP 428054 A
- GB 1580635 A
- WO 0066640 A
- US 4582816 A
- US 3405109 A
- US 3324093 A
- EP 479186 A
- US 5391654 A
- US 3374211 A
- US 3242150 A
- EP 1310295 A
- EP 891990 A
- EP 1415999 A
- EP 1591460 A
- EP 1860125 A
- EP 887379 A
- EP 887380 A
- EP 887381 A
- EP 991684 A
- US 4933149 A
- EP 684871 A
- WO 2005087361 A
- US 4578879 A
- EP 600414 A
- EP 721798 A
- WO 2007025640 A
- US 4543399 A
- EP 699213 A
- WO 9425495 A
- EP 696293 A
- WO 0105845 A
- EP 499759 A
- WO 0026258 A
- WO 0029452 A
- US 4621952 A
- EP 188125 A
- EP 250169 A
- EP 579426 A
- US 5026795 A
- US 4803251 A
- US 4532311 A
- US 4855370 A
- EP 560035 A
- EP 707513 A
- WO 97104015 A
- WO 2006022736 A
- WO 2006120187 A
- EP 1633466 A
- EP 1484343 A
- WO 9704015 A
- EP 08166131 A
- EP 1600276 A
- WO 03076498 A

- WO 0001473 A

**Non-patent literature cited in the description**

- **Geldart ; Bayens.** The Design of Distributors for Gas-fluidized Beds. *Powder Technology,* 1985, vol. 42

- **Geldart.** Gas Fluidization Technology. J.Wiley & Sons, 1986